(19) Europäisches Patentamt / European Patent Office / Office européen des brevets

(11) EP 2 794 686 B1

(12) **FASCICULE DE BREVET EUROPEEN**

(45) Date de publication et mention de la délivrance du brevet:
**18.05.2016 Bulletin 2016/20**

(21) Numéro de dépôt: **12810277.9**

(22) Date de dépôt: **20.12.2012**

(51) Int Cl.:
*C08F 36/04* (2006.01) *C08F 36/06* (2006.01)
*C08F 4/54* (2006.01) *C08K 5/56* (2006.01)

(86) Numéro de dépôt international:
**PCT/EP2012/076449**

(87) Numéro de publication internationale:
**WO 2013/092895 (27.06.2013 Gazette 2013/26)**

(54) **ACTIVATION DE SYSTÈMES CATALYTIQUES POUR LA POLYMÉRISATION STÉRÉOSPÉCIFIQUE DES DIÈNES**

AKTIVIERUNG VON KATALYTISCHEN SYSTEMEN ZUR STEREOSPEZIFISCHEN POLYMERISATION VON DIENEN

ACTIVATION OF CATALYTIC SYSTEMS FOR THE STEREOSPECIFIC POLYMERIZATION OF DIENES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2011 FR 1162301**

(43) Date de publication de la demande:
**29.10.2014 Bulletin 2014/44**

(73) Titulaires:
- **Compagnie Générale des Etablissements Michelin**
  **63000 Clermont-Ferrand (FR)**
- **MICHELIN Recherche et Technique S.A.**
  **1763 Granges-Paccot (CH)**

(72) Inventeurs:
- **THUILLIEZ, Julien**
  **F-63040 Clermont-Ferrand cedex 09 (FR)**
- **ROLLAND, Olivier**
  **F-92170 Vanves (FR)**

(74) Mandataire: **Le Cam, Véronique Marie Christine**
**Manufacture Française des Pneumatiques Michelin**
**23 Place des Carmes-Déchaux**
**SGD/LG/PI - F35 - Ladoux**
**63040 Clermont-Ferrand Cedex (FR)**

(56) Documents cités:
**EP-A1- 1 972 644 EP-A2- 1 099 711**
**WO-A1-03/097708 WO-A2-00/69928**

- **FRIEBE L ET AL: "Comparison of the Solvents n-Hexane, tert-Butyl Benzene and Toluene in the Polymerization of 1,3-Butadiene with the Ziegler Catalyst System Neodymium Versatate/Diisobutylaluminum Hydride/Ethylaluminum Sesquichloride", JOURNAL OF MACROMOLECULAR SCIENCE : PART A - CHEMISTRY, MARCEL DEKKER, NEW YORK, NY, US, vol. 43, no. 6, 1 janvier 2006 (2006-01-01), pages 841-854, XP009160664, ISSN: 0022-233X, DOI: 10.1080/10601320600653574**
- **LARS FRIEBEAB ET AL: "A Comparison of Neodymium Versatate, Neodymium Neopentanolate and Neodymium Bis(2-ethylhexyl)phosphate in Ternary Ziegler Type Catalyst Systems With Regard to their Impact on the Polymerization of 1,3-Butadiene", JOURNAL OF MACROMOLECULAR SCIENCE : PART A - CHEMISTRY, MARCEL DEKKER, NEW YORK, NY, US, vol. 42, no. 7, 1 janvier 2005 (2005-01-01), pages 839-851, XP009160663, ISSN: 0022-233X, DOI: 10.1081/MA-200063118**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne un système catalytique activé utilisable pour la polymérisation d'élastomères diéniques, tels que des polybutadiènes et des polyisoprènes, et notamment pour la polymérisation stéréospécifique 1,4-cis des diènes conjugués. L'invention porte également sur un procédé de préparation dudit système catalytique, un procédé de polymérisation de diènes conjugués mettant en oeuvre ledit système catalytique, un procédé d'activation de système catalytique, l'utilisation dudit système catalytique pour la polymérisation stéréospécifique 1,4-cis des diènes conjugués et enfin l'utilisation de composé de formule (I) pour activer des systèmes catalytiques particuliers.

Pour la préparation de polybutadiènes ou de polyisoprènes présentant un taux élevé d'enchaînements cis-1,4, il est connu d'utiliser des systèmes catalytiques à base :

- d'un sel de terre rare en solution dans un solvant hydrocarboné,
- d'un agent d'alkylation de ce sel constitué d'un alkylaluminium, et
- d'un halogénure d'un alkylaluminium.

Il est par exemple connu, d'après le document « Compte-rendu de l'Académie des Sciences d'U.RS.S., tome 234, n°5, 1977 (Y. B. Monakov, Y. R. Bieshev, A. A. Berg, S. R. Rafikov) » d'utiliser, pour la polymérisation de l'isoprène, un système catalytique comprenant:

- un sel de néodyme ou de praséodyme de l'acide bis(2-éthylhexyl)phosphorique, à titre de sel de terre rare, en solution dans du toluène,
- du triisobutylaluminium à titre d'agent d'alkylation, selon un rapport molaire (agent d'alkylation / sel de terre rare) égal à 20, et
- du chlorure de diéthylaluminium à titre d'halogénure d'un alkylaluminium.

On notera l'absence dans ce système catalytique d'une faible quantité de diène à polymériser, destiné à préparer un catalyseur préformé.

On peut également citer le document « Proceedings of China - U. S. Bilatéral Symposium on Polymer Chemistry and Physics, Science Press, pp. 382-398, 1981 (O. Jun, W. Fosong, S. Zhiquan) ». Ce document enseigne l'utilisation d'un sel de néodyme de l'acide bis(2-éthylhexyl)phosphorique, en association avec du triéthylaluminium ou du triisobutylaluminium, et un halogénure d'alkylaluminium de formule $Al_2(C_2H_5)_3Cl_3$. Toutefois, il a été observé que l'activité catalytique d'un tel système n'est pas satisfaisante.

Le document de brevet américain US-A-3 794 604 décrit dans ses exemples de réalisation un système catalytique de type « préformé » en présence d'un monomère diène conjugué, comprenant :

- du butadiène ou de l'isoprène à titre de monomère diène conjugué,
- de l'octanoate de cérium à titre de sel de terre rare en solution dans du benzène,
- de l'hydrure de diisobutyl aluminium à titre d'agent d'alkylation, selon un rapport molaire (agent d'alkylation / sel de terre rare) sensiblement égal à 20, et
- du dichlorure d'éthylaluminium à titre d'halogénure d'alkylaluminium.

On notera également que le solvant utilisé pour la préparation de tels catalyseurs est le benzène, c'est-à-dire un solvant aromatique non substitué, qui peut poser problème au niveau hygiène et toxicité.

Le document de brevet japonais JP-A-60/23406 décrit également un système catalytique de type « préformé » en présence de butadiène, qui est spécifiquement prévu pour la polymérisation du butadiène. Les systèmes catalytiques, qui ont été testés dans les exemples de réalisation de ce document comprennent :

- un sel de néodyme de l'acide bis(2-éthylhexyl)phosphorique à titre de sel de terre rare en solution dans du n-hexane ou du cyclohexane,
- du triisobutylaluminium ou de l'hydrure de diisobutyl aluminium à titre d'agent d'alkylation, selon un rapport molaire (agent d'alkylation / sel de terre rare) qui varie de 10 à 30, et
- du sesquichlorure d'éthylaluminium à titre d'halogénure d'alkylaluminium.

On notera que plusieurs solvants sont utilisables, tels que les hydrocarbures aliphatiques ou alicycliques, les hydrocarbures aromatiques ou halogénés. Il est mis en évidence l'intérêt de préparer séparément le catalyseur de polymérisation pour obtenir des activités élevées. Toutefois, l'activité catalytique de ce système n'est pas suffisante.

Le document de brevet européen EP 1 099 711 décrit un polymère diène conjugué obtenu à l'aide d'un catalyseur spécifique qui comprend un composé de terre rare, un aluminosiloxane et/ou un organoaluminium et un composé

contenant de l'halogène.

Par ailleurs, le document « Comparison of the solvents n-hexane, tert-butyl benzene and toluene in the polymerization of 1,3-butadiene with the Ziegler catalyst system neodymium versatate/diisobutylaluminum hybride/ethylaluminum sesquichloride, Journal of Maeromolecular Science, Part A: Pure and Applied Chemistry, 43:841-854, 2006 (L. Friebe et al) » compare les solvants, tels que l'hexane, le tert-butylbenzène et le toluène dans la réaction de polymérisation du 1,3-butadiène par un système catalytique au néodymium.

Une des principales caractéristiques des différents catalyseurs décrits plus haut dans la perspective d'une application industrielle est l'activité catalytique, c'est-à-dire la quantité de polymère fabriqué par unité de temps et par mole de catalyseur (plus précisément par mole de métal de terre rares, c'est-à-dire le néodyme). En effet, l'enjeu est de réussir à fabriquer un polymère possédant les caractéristiques de choix, telles que la microstructure (par exemple, le taux d'unité 1,4-cis) ou la macrostructure (valeurs et distribution de masses molaires, présence de ramifications ou non), en utilisant la plus faible quantité possible de catalyseur (plus précisément, de sel de terres rares). Ainsi, toute solution visant à améliorer l'activité catalytique de ces familles de catalyseurs sans impact sur les caractéristiques du polymère est digne d'intérêt.

Un inconvénient majeur des systèmes catalytiques connus est qu'il n'existe pas de solutions techniques simples et sans impact sur les caractéristiques du polymère synthétisé permettant d'augmenter l'activité catalytique pour la polymérisation des diènes conjugués, en particulier pour l'homopolymérisation de butadiène et pour celle de l'isoprène.

La demanderesse a découvert d'une manière inattendue qu'un système catalytique activé de type « préformé » pour la polymérisation stéréospécifique 1,4-cis des diènes conjugués à base d'au moins :

- un ou plusieurs monomères diènes conjugués de préformation,
- un ou plusieurs sels d'un ou de plusieurs métaux de terre rare d'un ou plusieurs acides choisis parmi un acide phosphorique organique, un acide carboxylique organique et leur mélange, le rapport molaire du monomère diène conjugué sur le sel de terre rare étant au moins de 10 et inférieur à 100.
- un ou plusieurs agents d'alkylation constitué d'un ou plusieurs alkylaluminiums de formule $AlR_3$ ou $HAlR_2$, dans laquelle R représente un radical alkyle et H représente un atome d'hydrogène,
- un ou plusieurs donneurs d'halogène constitué d'un halogénure d'alkylaluminium et
- un ou plusieurs composés répondant à la formule (I) suivante :

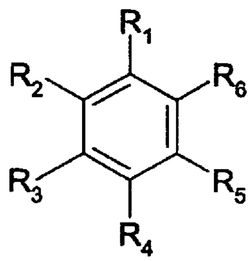

dans laquelle les groupes $R_1$ à $R_6$, identiques ou différents, sont choisis parmi un atome d'hydrogène, un radical alkyle aliphatique, linéaire ou ramifié, saturé ou insaturé, cycloaliphatique ou aromatique, à la condition que l'un au moins des groupes $R_1$ à $R_6$ ne désigne pas un atome d'hydrogène,
permet de remédier aux inconvénients précités en présentant une augmentation de l'activité catalytique des catalyseurs pour l'obtention d'élastomères diéniques, tels que des polybutadiènes et des polyisoprènes.

En particulier, l'utilisation d'un composé répondant à la formule (I) lors de la préparation du catalyseur conduit à une augmentation de l'activité catalytique du système catalytique, tout en conservant les caractéristiques de la microstructure et de la macrostructure des polydiènes conjugués obtenus.

L'invention a également pour objet un procédé de préparation dudit système catalytique.

L'invention porte également sur un procédé de polymérisation d'élastomères diéniques, mettant en oeuvre le système catalytique activé selon l'invention conduisant à des polymères à taux élevé d'enchaînements cis-1,4.

L'invention porte aussi sur un procédé d'activation de système catalytique particulier.

L'invention a également pour objet l'utilisation dudit système catalytique pour la polymérisation stéréospécifique 1,4-cis des diènes conjugués.

L'invention porte enfin sur l'utilisation de composé(s) de formule (I) pour activer des systèmes catalytiques particuliers utiles pour la polymérisation stéréospécifique 1,4-cis des diènes conjugués.

D'autres objets, caractéristiques, aspects et avantages de l'invention apparaîtront encore plus clairement à la lecture de la description et des exemples qui suivent.

Bien entendu, par l'expression « à base de » utilisée pour définir les constituants du système catalytique, on

entend le mélange de ces constituants et/ou le produit de la réaction entre ces constituants.

D'autre part, tout intervalle de valeurs désigné par l'expression "entre a et b" représente le domaine de valeurs allant de plus de a à moins de b (c'est-à-dire bornes a et b exclues), tandis que tout intervalle de valeurs désigné par l'expression "de a à b" signifie le domaine de valeurs allant de a jusqu'à b (c'est-à-dire incluant les bornes strictes a et b).

Par système catalytique de type « préformé », on entend au sens de la présente invention un système qui comporte le monomère diène conjugué à polymériser, introduit à hauteur au moins de 10 et inférieur à 100 équivalents molaires par rapport au métal de terre rare.

*monomère diène conjugué de préformation*

Le système catalytique selon la présente invention comprend un ou plusieurs monomères diènes conjugués de préformation.

A titre de monomère diène conjugué utilisable pour « préformer » le système catalytique selon l'invention, on peut citer le 1,3-butadiène, le 2-méthyl-1,3-butadiène (ou isoprène), les 2,3-di (alcoyle en $C_1$ à $C_5$)-1,3-butadiène, tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, le phényl-1,3-butadiène, le 1,3-pentadiène, le 2,4-hexadiène, ou tout autre diène conjugué ayant entre 4 et 8 atomes de carbone.

De préférence, le monomère diène conjugué est choisi parmi le butadiène, l'isoprène et leur mélange.

Le rapport molaire du monomère diène conjugué sur le sel de terre rare est inférieur à 100, de préférence au plus de 80, plus préférentiellement de 70. Ce rapport est au moins de 10 et plus préférentiellement au moins de 15. Ainsi le rapport molaire du monomère diène conjugué sur le sel de terre rare est au moins de 10 et inférieur à 100, de préférence, il a une valeur allant de 10 à 80, et encore plus préférentiellement de 15 à 70.

*sel d'un ou de plusieurs métaux de terre rare*

Le système catalytique selon la présente invention comprend un ou plusieurs sels d'un ou de plusieurs métaux de terre rare, c'est-à-dire des métaux ayant un numéro atomique compris entre 57 et 71 dans le tableau périodique des éléments de Mendeleev, d'un acide phosphorique ou carboxylique organique.

Par métal de terre rare, on entend selon l'invention tout élément de la famille des lanthanides, l'yttrium ou le scandium. A titre préférentiel, l'élément de terre rare est choisi parmi les éléments yttrium, néodyme, gadolinium ou samarium, plus préférentiellement le néodyme ou le gadolinium.

Selon l'invention, le système catalytique selon la présente invention comprend un ou plusieurs sels d'un ou de plusieurs métaux de terre rare d'un ou plusieurs acides choisis parmi un acide phosphorique organique, un acide carboxylique organique et leur mélange. Selon une mise en oeuvre particulière de l'invention, le sel d'un ou de plusieurs métaux de terre rare est un acide phosphorique organique de ce ou ces métaux de terre rare.

Lorsque le sel est un carboxylate, celui-ci est choisi parmi les esters d'acides carboxyliques aliphatiques, linéaires ou ramifiés, ayant 6 à 20 atomes de carbone dans la chaîne linéaire, et les esters d'acides carboxyliques aromatiques comportant entre 6 et 12 atomes de carbone, substitués un groupement alkyle en $C_1$ à $C_9$ ou non. A titre d'exemple, on peut citer le néodécanoate (versatate), l'octoate, l'hexanoate, linéaires ou ramifiés, ou encore le naphthénate, substitué par un groupement alkyle en $C_1$ à $C_9$, ou non. Parmi la famille des carboxylates, le sel est de préférence le 2-éthylhexanoate, le naphténate ou le néodécanoate de terre rare.

Lorsque le sel est choisi parmi les organophosphates, celui-ci comprend les diesters d'acide phosphorique de formule générale $(R_aO)(R_bO)PO(OH)$, dans laquelle $R_a$ et $R_b$, identiques ou différents, représentent un radical alkyle linéaire ou ramifié, saturé ou insaturé, ayant 6 à 20 atomes de carbone dans la chaîne linéaire, aryle ou alkylaryle, éventuellement interrompu par un ou plusieurs hétéroatomes, tels que l'oxygène. Parmi ces diesters d'acide phosphorique, $R_a$ et $R_b$, identiques ou différents, sont de préférence un radical n-butyle, isobutyle, pentyle, amyle, isopentyle, 2,2-diméthylhexyle, 1-éthylhexyle, 2-éthylhexyle, tolyle, nonaphénoxyle.

Parmi la famille des organophosphates, le sel est de préférence le tris[di(2-éthylhexyl)phosphate] de terre rare.

Selon un exemple préférentiel de réalisation de l'invention, le sel d'un ou de plusieurs métaux de terre rare est choisi parmi le tris[di(2-éthylhexyl)phosphate], le tris(versatate) et leur mélange dudit ou desdits métaux de terre rare.

A titre encore plus préférentiel, ledit sel de terre rare est choisi parmi le tris[di(2-éthylhexyl)phosphate] de néodyme, le tris(versatate) de néodyme et leur mélange.

Le sel de métaux de terre rare peut être sous forme d'une poudre, d'une solution dans un solvant hydrocarboné inerte, d'une suspension dans un solvant hydrocarboné inerte ou alors d'un gel dans un solvant hydrocarboné inerte, selon la nature du sel et de ses substituants.

Selon un mode de réalisation de l'invention, le sel de terre rare peut se trouver sous la forme d'une poudre non hygroscopique ayant une légère tendance à s'agglomérer à la température ambiante.

Selon un deuxième mode de réalisation de l'invention, lorsque le sel de terre rare se trouve en suspension

dans un solvant hydrocarboné inerte, ce solvant est un solvant aliphatique ou alicyclique de bas poids moléculaire, tel que le pentane, l'isopentane, un mélange de pentanes, une coupe en $C_5$, les isoamylènes, l'hexane, un mélange d'hexanes, le cyclohexane, le méthylcyclohexane, le n-heptane, un mélange d'heptanes ou un mélange de ces solvants.

Selon un autre mode de réalisation de l'invention, le solvant utilisé pour la suspension du sel de terre rare peut être un mélange d'un solvant aliphatique de haut poids moléculaire comprenant une huile paraffinique, par exemple de l'huile de vaseline, et d'un solvant de bas poids moléculaire tel que ceux susmentionnés (par exemple le cyclohexane ou le méthylcyclohexane). On réalise cette suspension en procédant à un broyage dispersif du sel de terre rare dans une huile paraffinique, de sorte à obtenir une suspension très fine et homogène du sel.

Selon un mode préférentiel de réalisation de l'invention, le solvant utilisé pour réaliser la suspension, le gel ou la solution du sel de terre rare répond à la formule (I) décrite plus haut.

De préférence, le système catalytique selon l'invention présente une concentration molaire en sel de métal de terre rare comprise entre 0,005 mol/L et 0,100 mol/L, de préférence allant de 0,010 à 0,080 mol/L et encore plus préférentiellement de 0,020 à 0,060 mol/L.

*agent d'alkylation*

Le système catalytique selon la présente invention comprend un ou plusieurs agents d'alkylation.

A titre d'agent d'alkylation utilisable dans le système catalytique selon l'invention, on peut citer des alkylaluminiums de formule $AlR_3$ ou $HAlR_2$, dans laquelle R représente un radical alkyle linéaire ou ramifié, et saturé et H représente un atome d'hydrogène.

De préférence, le groupe R désigne un groupe alkyle en $C_1$-$C_8$, et plus particulièrement un n-propyle, isopropyle, n-butyle et isobutyle.

On peut citer des alkylaluminiums tels que:

- des trialkylaluminiums, le radical alkyle étant en $C_2$-$C_8$, par exemple le triéthylaluminium, le triisobutylaluminium, ou le trioctylaluminium, ou
- des hydrures de dialkylaluminium, le radical alkyle étant en $C_2$-$C_4$, par exemple l'hydrure de diisobutylaluminium.

On notera que cet agent d'alkylation est de préférence de l'hydrure de diisobutylaluminium.

Le rapport molaire de l'agent d'alkylation sur le sel de terre rare peut être compris entre 2 et 50 et, de préférence, entre 3 et 20, et encore plus préférentiellement allant de 4 à 10, car on utilise ainsi moins d'agent alkylant, ce qui présente un avantage économique incontestable en termes de consommation de réactifs.

*donneur d'halogène*

Le système catalytique selon la présente invention comprend un ou plusieurs donneurs d'halogène constitué d'un halogénure d'alkylaluminium.

A titre de donneur d'halogène utilisable dans le système catalytique selon l'invention, on peut citer des halogénures d'alkylaluminium, le radical alkyle linéaire ou ramifié, et saturé étant en $C_2$-$C_4$ et l'halogène étant du chlore ou du brome.

De préférence, le donneur d'halogène est choisi parmi le chlorure de diéthylaluminium, le bromure de diéthylaluminium, le dichlorure d'éthylaluminium ou le sesquichlorure d'éthylaluminium.

De préférence, le donneur d'halogène est du chlorure de diéthylaluminium.

Le rapport molaire du donneur d'halogène sur le sel de terre rare peut être compris entre 0,5 et 5,0 et, de préférence, entre 2,0 et 3,6, et encore plus préférentiellement entre 2,5 et 3,2.

*Composé aromatique*

Le système catalytique selon la présente invention comprend un ou plusieurs composés répondant à la formule (I) suivante :

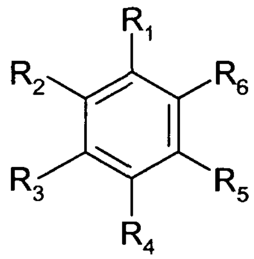

dans laquelle les groupes $R_1$ à $R_6$, identiques ou différents, sont choisis parmi un atome d'hydrogène, un radical alkyle aliphatique saturé ou insaturé, linéaire ou ramifié, cycloaliphatique ou aromatique, à la condition que l'un au moins des groupes $R_1$ à $R_6$ ne désigne pas un atome d'hydrogène.

De préférence, au moins un des groupements $R_1$ à $R_6$ est un radical alkyle aliphatique, saturé ou insaturé, linéaire ou ramifié.

Deux ou plusieurs des groupes $R_1$ à $R_6$ peuvent être liés entre eux de manière à former un cycle supplémentaire, tel qu'un cycle à 5 atomes de carbone, tels qu'un cyclopentadiène ou un cycle à 6 atomes de carbone aromatique ou non.

A titre d'exemples, les composés de formule (I) sont choisis parmi le toluène, le pentylbenzène, le 1,4-diméthylbenzène, l'indène, le 2-méthyl-indène le 2-éthylindène, le 2-propylindène, le 1-benzylindène, le 2-phénylindène le 1,1,5-triméthylindène, le fluorène, les naphtalène, anthracène ou phénanthrène porteurs d'un substituant alkyle, et leur mélange

De préférence, le composé de formule (I) est choisi parmi le toluène, le pentylbenzène, le 1,4-diméthylbenzène et leur mélange.

Le rapport molaire du composé de formule (I) sur le sel de terre rare peut être compris entre 5 et 1000 et, de préférence, allant de 50 à 500, et encore plus préférentiellement de 100 à 400.

*Solvants du système catalytique*

Le système catalytique ainsi préparé peut être mis en oeuvre dans un solvant hydrocarboné inerte. Ce solvant est un solvant aliphatique ou alicyclique de bas poids moléculaire, tel que le cyclohexane, le méthylcyclohexane, le n-heptane, ou un mélange de ces solvants. De préférence, le méthylcyclohexane est utilisé.

Selon un premier mode de réalisation de l'invention, le solvant du système catalytique est le solvant utilisé pour préparer la solution, la suspension ou bien le gel du sel de métal de terre rare décrit ci-dessus.

Selon un second mode de réalisation de l'invention, le composé de formule (I) constitue le solvant du système catalytique et est alors utilisé pour préparer la solution, la suspension ou bien le gel du sel de métal de terre rare décrit ci-dessus. De préférence, selon ce mode de réalisation, le système catalytique ne comprend pas d'autres solvants que le composé de formule (I).

Selon un troisième mode de réalisation de l'invention, le solvant du système catalytique est un mélange de composé de formule (I) et de solvant aliphatique.

Ainsi, le solvant du système catalytique peut être choisi parmi le cyclohexane, le méthylcyclohexane, le n-heptane, le toluène, le pentylbenzène, le 1,4-diméthylbenzène et leur mélange.

Il a été observé que les systèmes catalytiques comportant un composé de formule (I) présentent une activité catalytique supérieure à celles des systèmes catalytiques analogues, mais dépourvus de ce composé de formule (I), tout en gardant des propriétés de micro- et macrostructures similaires.

*Procédé de préparation*

L'invention a également pour objet un procédé de préparation dudit système catalytique comprenant les étapes successives suivantes :

- dans une première étape, réaliser une suspension ou solution ou gel dudit sel de métal terre rare tel que défini ci-dessus dans un solvant, comportant éventuellement ledit composé de formule (I),
  si le solvant ne comporte pas le composé de formule (I), ajouter ledit composé répondant à la formule (I) tel que défini ci-dessus, puis
- dans une seconde étape, ajouter au mélange obtenu à l'étape précédente un ou plusieurs monomères diènes conjugués de préformation tels que définis ci-dessus, puis
- dans une troisième étape, ajouter un ou plusieurs agents d'alkylation tels que définis ci-dessus au mélange obtenu à l'étape précédente pour l'obtention d'un sel alkylé, et

- dans une quatrième étape, ajouter un ou plusieurs donneurs d'halogène au sel alkylé obtenu à l'étape précédente.

De préférence, la première étape de mise en contact du sel de métal de terre rare avec un solvant hydrocarboné contenant éventuellement un ou plusieurs composés de formule (I) est réalisée à une température comprise entre 15 et 100°C, et dure entre 1 minutes et 24 heures, et plus préférentiellement entre 2 minutes et 120 minutes.
De préférence, la deuxième étape d'addition du monomère diénique conjugué au mélange obtenu à la première étape est réalisée à une température comprise entre 15 et 100°C, et dure moins d'une minute.
De préférence, la troisième étape d'addition de l'alkylaluminium au mélange obtenu à la deuxième étape est réalisée à une température comprise entre 15 et 100°C, et dure entre 3 et 120 minutes.
De préférence, la quatrième étape d'addition du donneur d'halogène au sel alkylé au mélange obtenu à la troisième étape est réalisée à une température comprise entre 15 et 100°C, et dure entre 3 et 120 minutes.
Des variantes possibles du procédé de préparation du système catalytique activé selon l'invention consistent à inverser les deux premières étapes mentionnées ci-dessus. En tout état de cause, il est important d'avoir une mise en contact du sel de terre rare avec le composé (I), avant toute mise en contact avec l'agent d'alkylation.

*<u>Procédé de polymérisation,</u>*

L'invention porte également sur un procédé de synthèse d'élastomères diéniques consistant à polymériser dans un solvant hydrocarboné inerte le ou des monomères diènes en présence d'un système catalytique tel que défini ci-dessus.
L'élastomère diénique obtenu peut être tout homopolymère ou copolymère obtenu par homopolymérisation ou copolymérisation d'un monomère diène conjugué ayant de 4 à 12 atomes de carbone.
A titre de monomère diène conjugué conviennent notamment le butadiène-1,3, l'isoprène, les 2,3-di(alkyle en $C_1$ à $C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.
L'élastomère diénique obtenu par le procédé de polymérisation selon l'invention est caractérisé par un taux élevé d'enchaînements cis-1,4.
De préférence, le système catalytique activé selon l'invention est utilisé pour la polymérisation de polybutadiène (BR) ou de polyisoprène (IR).
La polymérisation est effectuée de manière connue en soi, de préférence en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.
La polymérisation peut être effectuée en continu ou en discontinu. On effectue généralement la polymérisation à une température comprise entre 20°C et 120°C et de préférence voisine de 30°C à 110°C.
Avantageusement et en comparaison à un procédé mettant en oeuvre un système catalytique ne comprenant pas de composé de formule (I), le procédé selon l'invention permet d'obtenir avec une activité catalytique améliorée, un élastomère diénique caractérisé par un taux élevé d'enchaînements cis-1,4 et par une distribution des masses moléculaires contrôlée, comme le montrent les exemples qui suivent. Cet élastomère peut être par exemple constitué d'un polyisoprène (IR) ou d'un polybutadiène (BR).
Ces taux d'enchaînements cis-1,4 sont mesurés à la fois selon la technique de résonance magnétique nucléaire du carbone 13 et selon la technique de dosage par moyen infrarouge, qui appartiennent à un domaine supérieur à 96 %, de préférence d'au moins 96,5%.
Selon des variantes d'exécution du procédé de polymérisation catalytique conforme à l'invention, on peut ajouter au milieu de polymérisation, indépendamment de l'introduction du système catalytique utilisé pour la réaction de polymérisation, une quantité supplémentaire prédéterminée d'au moins un composé alkylaluminium de formules $AlR_3$ ou $HAlR_2$ ou $R''_nAlR'_{3-n}$, dans lesquelles R et R' représentent un groupe alkyle de 1 à 20 atomes de carbone, saturé ou non, préférentiellement de 1 à 12 atomes de carbone, R" représente un groupe allylique, n un entier inclusivement de 1 à 3. De telles variantes sont décrites notamment dans les documents WO2006/133757, EP 1845118, WO 10/069511, WO10/069805. C'est-à-dire que l'adjonction ne se fait pas dans le milieu de polymérisation en même temps et, par conséquent, elle se fait soit avant, soit après, soit en partie avant et en partie après, par rapport à l'introduction du système catalytique préformé utilisé pour catalyser la réaction de polymérisation.
A titre de ce composé alkylaluminium ajouté en décalé, qui peut être identique ou différent de l'agent alkylant du système catalytique, on peut citer les alkylaluminiums tels que définis pour ledit agent alkylant.
On notera que cet agent d'alkylation ajouté en décalé est de préférence constitué de l'hydrure de diisobutylaluminium. Avantageusement, le rapport molaire (composé alkylaluminium ajouté en décalé / agent alkylant dans le système catalytique) varie de 1/20 à 10/1 et selon une forme d'exécution avantageuse varie de 1/10 à 7/1 et plus préférentiellement de 1/1 à 5/1.

On notera que l'ajout du composé alkylaluminium avant polymérisation permet de s'affranchir des fluctuations dans le temps des impuretés dues aux solvants de polymérisation qui sont recyclés en entrée de ligne et de ne pas pénaliser, du fait de ces fluctuations, l'activité du système catalytique, de sorte à minimiser la dispersion des caractéristiques de l'élastomère obtenu notamment des masses moléculaires.

*Procécé d'activation*

L'invention porte également sur un procédé d'activation d'un système catalytique de type « préformé » pour la polymérisation stéréospécifique 1,4-cis des diènes conjugués à base d'au moins:

- un ou plusieurs monomères diènes conjugués de préformation,
- un ou plusieurs sels d'un ou de plusieurs métaux de terre rare d'un ou plusieurs acides choisis parmi un acide phosphorique organique, un acide carboxylique organique et leur mélange,
- un ou plusieurs agents d'alkylation constitué d'un ou plusieurs alkylaluminiums de formule $AlR_3$ ou $HAlR_2$, dans laquelle R représente un radical alkyle et H représente un atome d'hydrogène,
- un ou plusieurs donneurs d'halogène constitué d'un halogénure d'alkylaluminium,

comprenant une étape d'ajout d'un composé de formule (I) précité aux sels d'un ou de plusieurs métaux de terre rare.

Par « activer un système catalytique », on entend au sens de la présente invention augmenter l'activité catalytique du système catalytique, ne contenant pas de composé de formule (I), tout en conservant les caractéristiques micro- et macrostructurelles du polymère synthétisé. De préférence, cette augmentation peut se mesurer en comparant les taux de conversion des réactifs après un temps t à déterminer, par exemple 5 minutes.

*Utilisation*

L'invention porte aussi sur l'utilisation dudit système catalytique activé pour la polymérisation stéréospécifique 1,4-cis des diènes conjugués.

L'invention porte enfin sur l'utilisation d'un composé de formule (I) tel que défini ci-dessus pour activer un système catalytique de type « préformé » pour la polymérisation stéréospécifique 1,4-cis des diènes conjugués à base de:

- un ou plusieurs monomères diènes conjugués de préformation,
- un ou plusieurs sels d'un ou de plusieurs métaux de terre rare d'un ou plusieurs acides choisis parmi un acide phosphorique organique, un acide carboxylique organique et leur mélange,
- un ou plusieurs agents d'alkylation constitué d'un ou plusieurs alkylaluminiums de formule $AlR_3$ ou $HAlR_2$, dans laquelle R représente un radical alkyle et H représente un atome d'hydrogène,
- un ou plusieurs donneurs d'halogène constitué d'un halogénure d'alkylaluminium,

par adjonction d'un composé de formule (I) précité aux sels d'un ou de plusieurs métaux de terre rare.

Les caractéristiques précitées de la présente invention, ainsi que d'autres, seront mieux comprises à la lecture des exemples de réalisation de l'invention, donnés à titre illustratif et non limitatif.

<u>Exemples</u>

<u>Formation des systèmes catalytiques</u>

Les systèmes catalytiques ont été préparés dans des bouteilles « Steinie » de 250 mL. L'ensemble de ces préparations a été réalisé sous atmosphère inerte d'azote. Tous les solvants (méthylcyclohexane et toluène) utilisés lors de ces préparations sont secs (barbotés à l'azote pendant 10 minutes) et sous atmosphère inerte. L'ensemble des réactifs proviennent de Sigma-Aldrich, Strem et Fluka. Les solutions d'hydrure de diisobutylaluminium et de chlorure de diéthylaluminium utilisées lors de la préparation des systèmes catalytiques A-D, I-O, E, F, P et Q ont été préparées dans le méthylcyclohexane à des concentrations de 1,014 et 0,500 $mol.L^{-1}$ respectivement. Les solutions d'hydrure de diisobutylaluminium et de chlorure de diéthylaluminium utilisées dans les exemples G et H ont été préparées dans le méthylcyclohexane à des concentrations de 1,014 et 0,500 $mol.L^{-1}$ respectivement.

<u>Système catalytique A (comparatif)</u>

Une solution de 48,6 mL de méthylcyclohexane est additionnée sur 1,55 g de tri(di(2-éthylhexyl)phosphate) de néodyme (1,4 mmol, 1 éq.). Le mélange obtenu est agité à température ambiante pendant 30 minutes puis mis au

repos pendant 12 h pour former un gel violet. A ce gel sont ajoutés successivement 3,7 mL de butadiène (42 mmol, 30 éq.) et 8,08 mL d'hydrure de diisobutylaluminium (8,4 mmol, 6 éq.). Le mélange obtenu est agité à 30°C pendant 15 minutes. A la solution obtenue est ajoutée 8,12 mL de chlorure de diéthylaluminium (4,06 mmol, 2,9 éq.) et le mélange obtenu est agité à 60°C pendant 70 minutes pour obtenir une solution de couleur orange / marron à une concentration en néodyme de 0,02 $mol.L^{-1}$.

Système catalytique B (selon l'invention)

Une solution de 48,6 mL de toluène (456 mmol, 326 éq.) est additionnée sur 1,55 g de tri(di(2-éthylhexyl)phosphate) de néodyme (1,4 mmol, 1 éq.). Le mélange obtenu est agité à température ambiante pendant 30 minutes puis mis au repos pendant 12 h pour former une suspension de solide solvaté violet. A cette suspension sont ajoutés successivement 3,7 mL de butadiène (42 mmol, 30 éq.) et 8,08 mL d'hydrure de diisobutylaluminium (8,4 mmol, 6 éq.). Le mélange obtenu est agité à 30°C pendant 15 minutes. A la solution obtenue est ajoutée 8,12 mL de chlorure de diéthylaluminium (4,06 mmol, 2,9 éq.) et le mélange obtenu est agité à 60°C pendant 70 minutes pour obtenir une solution de couleur orange / marron à une concentration en néodyme de 0,02 $mol.L^{-1}$.

Système catalytique C (comparatif)

Une solution de 25,4 mL de méthylcyclohexane est additionnée sur 0,78 g de tri(di(2-éthylhexyl)phosphate) de néodyme (0,7 mmol, 1 éq.). Le mélange obtenu est agité à température ambiante pendant 30 minutes puis mis au repos pendant 12 h pour former un gel violet. A ce gel sont ajoutés successivement 1,8 mL de butadiène (21 mmol, 30 éq.) et 2,36 mL d'hydrure de diisobutylaluminium (2,45 mmol, 3,5 éq.). Le mélange obtenu est agité à 30°C pendant 15 minutes. A la solution obtenue est ajoutée 4,06 mL de chlorure de diéthylaluminium (2,03 mmol, 2,9 éq.) et le mélange obtenu est agité à 60°C pendant 70 minutes pour obtenir une solution de couleur orange / marron à une concentration en néodyme de 0,02 $mol.L^{-1}$.

Système catalytique D (selon l'invention)

Une solution de 25,4 mL de toluène (239 mmol, 342 éq.) est additionnée sur 0,78 g de tri(di(2-éthylhexyl)phosphate) de néodyme (0,7 mmol, 1 éq.). Le mélange obtenu est agité à température ambiante pendant 30 minutes puis mis au repos pendant 12 h pour former une suspension de solide solvaté violet. A cette suspension sont ajoutés successivement 1,8 mL de butadiène (21 mmol, 30 éq.) et 2,36 mL d'hydrure de diisobutylaluminium (2,45 mmol, 3,5 éq.). Le mélange obtenu est agité à 30°C pendant 15 minutes. A la solution obtenue est ajoutée 4,06 mL de chlorure de diéthylaluminium (2,03 mmol, 2,9 éq.) et le mélange obtenu est agité à 60°C pendant 70 minutes pour obtenir une solution de couleur orange / marron à une concentration en néodyme de 0,02 $mol.L^{-1}$.

Système catalytique E (comparatif)

Une solution de 12,5 mL de méthylcyclohexane est additionnée sur 3,28 mL de gel de tri(di(2-éthylhexyl)phosphate) de néodyme à 0,134 mol.L-1 dans le cyclohexane (0,44 mmol, 1 éq.). Le mélange obtenu est agité à température ambiante pendant 30 minutes puis mis au repos pendant 12 h pour former un gel violet. A ce gel sont ajoutés successivement 1,1 mL de butadiène (13,2 mmol, 30 éq.) et 2,6 mL d'hydrure de diisobutylaluminium (2,6 mmol, 6 éq.). Le mélange obtenu est agité à 30°C pendant 15 minutes. A la solution obtenue est ajoutée 2,4 mL de chlorure de diéthylaluminium (1,28 mmol, 2,9 éq.) et le mélange obtenu est agité à 60°C pendant 70 minutes pour obtenir une solution de couleur marron translucide à une concentration en néodyme de 0,02 $mol.L^{-1}$.

Système catalytique F selon l'invention)

Une solution de 12,5 mL de toluène (117 mmol, 266 éq.) est additionnée sur 3,28 mL de gel de tri(di(2-éthylhexyl)phosphate) de néodyme à 0,134 $mol.L^{-1}$ dans le cyclohexane (0,44 mmol, 1 éq.). Le mélange obtenu est agité à température ambiante pendant 30 minutes puis mis au repos pendant 12 h pour former un gel violet. A ce gel sont ajoutés successivement 1,1 mL de butadiène (13,2 mmol, 30 éq.) et 2,6 mL d'hydrure de diisobutylaluminium (2,6 mmol, 6 éq.). Le mélange obtenu est agité à 30°C pendant 15 minutes. A la solution obtenue est ajoutée 2,4 mL de chlorure de diéthylaluminium (1,28 mmol, 2,9 éq.) et le mélange obtenu est agité à 60°C pendant 70 minutes pour obtenir une solution de couleur marron translucide à une concentration en néodyme de 0,02 $mol.L^{-1}$.

Système catalytique G (comparatif)

Une solution de 22 mL de méthylcyclohexane est additionnée sur 1,58 mL de tris(versatate) de néodyme à 0,506 mol.L-1 dans l'hexane (0,80 mmol, 1 éq.). Le mélange obtenu est agité à température ambiante pendant 30 minutes puis mis au repos pendant 12 h pour former un gel violet. A ce gel sont ajoutés successivement 2 mL de butadiène (24 mmol, 30 éq.) et 9,50 mL d'hydrure de diisobutylaluminium (9,63 mmol, 12 éq.). Le mélange obtenu est agité à 30°C pendant 15 minutes. A la solution obtenue est ajoutée 4,65 mL de chlorure de diéthylaluminium (2,33 mmol, 2,9 éq.) et le mélange obtenu est agité à 60°C pendant 70 minutes pour obtenir une solution de couleur marron translucide à une concentration en néodyme de 0,02 mol.L-1.

Système catalytique H (selon l'invention)

Une solution de 22 mL de toluène (206 mmol, 258 éq.) est additionnée sur 1,58 mL de tris(versatate) de néodyme à 0,0506 $mol.L^{-1}$ dans l'hexane (0,80 mmol, 1 éq.). Le mélange obtenu est agité à température ambiante pendant 30 minutes puis mis au repos pendant 12 h pour former un gel violet. A ce gel sont ajoutés successivement 2 mL de butadiène (24 mmol, 30 éq.) et 9,50 mL d'hydrure de diisobutylaluminium (9,63 mmol, 12 éq.). Le mélange obtenu est agité à 30°C pendant 15 minutes. A la solution obtenue est ajoutée 4,65 mL de chlorure de diéthylaluminium (2,33 mmol, 2,9 éq.) et le mélange obtenu est agité à 60°C pendant 70 minutes pour obtenir une solution de couleur marron translucide à une concentration en néodyme de 0,02 $mol.L^{-1}$.

Système catalytique I (selon l'invention)

Une solution constituée de 22,8 mL de méthylcyclohexane et de 1 mL de toluène (9,4 mmol, 13 éq.) est additionnée sur 0,78 g de tri(di(2-éthylhexyl)phosphate) de néodyme (0,7 mmol, 1 éq.). Le mélange obtenu est agité à température ambiante pendant 30 minutes puis mis au repos pendant 12 h pour former un gel limpide violet. A ce gel sont ajoutés successivement 1,8 mL de butadiène (21 mmol, 30 éq.) et 4,04 mL d'hydrure de diisobutylaluminium (4,2 mmol, 6 éq.). Le mélange obtenu est agité à 30°C pendant 15 minutes. A la solution obtenue est ajoutée 4,06 mL de chlorure de diéthylaluminium (2,03 mmol, 2,9 éq.) et le mélange obtenu est agité à 60°C pendant 70 minutes pour obtenir une solution de couleur orange / marron à une concentration en néodyme de 0,02 $mol.L^{-1}$.

Système catalytique J (selon l'invention)

Une solution constituée de 18,8 mL de méthylcyclohexane et de 5 mL de toluène (46,9 mmol, 67 éq.) est additionnée sur 0,78 g de tri(di(2-éthylhexyl)phosphate) de néodyme (0,7 mmol, 1 éq.). Le mélange obtenu est agité à température ambiante pendant 30 minutes puis mis au repos pendant 12 h pour former un gel limpide violet. A ce gel sont ajoutés successivement 1,8 mL de butadiène (21 mmol, 30 éq.) et 4,04 mL d'hydrure de diisobutylaluminium (4,2 mmol, 6 éq.). Le mélange obtenu est agité à 30°C pendant 15 minutes. A la solution obtenue est ajoutée 4,06 mL de chlorure de diéthylaluminium (2,03 mmol, 2,9 éq.) et le mélange obtenu est agité à 60°C pendant 70 minutes pour obtenir une solution de couleur orange / marron à une concentration en néodyme de 0,02 $mol.L^{-1}$.

Système catalytique K (selon l'invention)

Une solution constituée de 13,8 mL de méthylcyclohexane et de 10 mL de toluène (93,9 mmol, 134 éq.) est additionnée sur 0,78 g de tri(di(2-éthylhexyl)phosphate) de néodyme (0,7 mmol, 1 éq.). Le mélange obtenu est agité à température ambiante pendant 30 minutes puis mis au repos pendant 12 h pour former un gel limpide violet. A ce gel sont ajoutés successivement 1,8 mL de butadiène (21 mmol, 30 éq.) et 4,04 mL d'hydrure de diisobutylaluminium (4,2 mmol, 6 éq.). Le mélange obtenu est agité à 30°C pendant 15 minutes. A la solution obtenue est ajoutée 4,06 mL de chlorure de diéthylaluminium (2,03 mmol, 2,9 éq.) et le mélange obtenu est agité à 60°C pendant 70 minutes pour obtenir une solution de couleur orange / marron à une concentration en néodyme de 0,02 $mol.L^{-1}$.

Système catalytique L (selon l'invention)

A 0,78 g de tri(di(2-éthylhexyl)phosphate) de néodyme (0,7 mmol, 1 éq.) sont ajoutés successivement 11,8 mL de méthylcyclohexane et 11,8 mL de toluène (111 mmol, 159 éq.). Le mélange obtenu est agité à température ambiante pendant 30 minutes puis mis au repos pendant 12 h pour former une solution visqueuse limpide. Sont ensuite ajoutés successivement 1,8 mL de butadiène (21 mmol, 30 éq.) et 4,04 mL d'hydrure de diisobutylaluminium (4,2 mmol, 6 éq.). Le mélange obtenu est agité à 30°C pendant 15 minutes. A la solution obtenue est ajoutée 4,06 mL de chlorure de diéthylaluminium (2,03 mmol, 2,9 éq.) et le mélange obtenu est agité à 60°C pendant 70 minutes pour obtenir une

solution de couleur orange / marron à une concentration en néodyme de 0,02 mol.$L^{-1}$.

Système catalytique M (selon l'invention)

A 0,78 g de tri(di(2-éthylhexyl)phosphate) de néodyme (0,7 mmol, 1 éq.) sont ajoutés successivement 11,8 mL de toluène (111 mmol, 159 éq.) et 11,8 mL de méthylcyclohexane. Le mélange obtenu est agité à température ambiante pendant 30 minutes puis mis au repos pendant 12 h pour former un gel limpide. A ce gel sont ajoutés successivement 1,8 mL de butadiène (21 mmol, 30 éq.) et 4,04 mL d'hydrure de diisobutylaluminium (4,2 mmol, 6 éq.). Le mélange obtenu est agité à 30°C pendant 15 minutes. A la solution obtenue est ajoutée 4,06 mL de chlorure de diéthylaluminium (2,03 mmol, 2,9 éq.) et le mélange obtenu est agité à 60°C pendant 70 minutes pour obtenir une solution de couleur orange / marron à une concentration en néodyme de 0,02 mol.$L^{-1}$.

Système catalytique N (comparatif)

Une solution constituée de 14,4 mL de méthylcyclohexane est additionnée sur 0,78 g de tri(di(2-éthylhexyl)phosphate) de néodyme (0,7 mmol, 1 éq.). Le mélange obtenu est agité à température ambiante pendant 30 minutes puis mis au repos pendant 12 h pour former un gel violet. A ce gel sont ajoutés successivement 1,8 mL de butadiène (21 mmol, 30 éq.) et 4,04 mL d'hydrure de diisobutylaluminium (4,2 mmol, 6 éq.). Le mélange obtenu est agité à 30°C pendant 15 minutes. A la solution obtenue sont ajoutés successivement 5 mL de méthylcyclohexane et 4,06 mL de chlorure de diéthylaluminium (2,03 mmol, 2,9 éq.) et le mélange obtenu est agité à 60°C pendant 70 minutes pour obtenir une solution de couleur orange / marron à une concentration en néodyme de 0,02 mol.L-1.

Système catalytique O (selon l'invention)

Une solution constituée de 14,4 mL de méthylcyclohexane est additionnée sur 0,78 g de tri(di(2-éthylhexyl)phosphate) de néodyme (0,7 mmol, 1 éq.). Le mélange obtenu est agité à température ambiante pendant 30 minutes puis mis au repos pendant 12 h pour former un gel limpide violet. A ce gel sont ajoutés successivement 1,8 mL de butadiène (21 mmol, 30 éq.) et 4,04 mL d'hydrure de diisobutylaluminium (4,2 mmol, 6 éq.). Le mélange obtenu est agité à 30°C pendant 15 minutes. A la solution obtenue sont ajoutés successivement 5 mL de toluène et 4,06 mL de chlorure de diéthylaluminium (2,03 mmol, 2,9 éq.) et le mélange obtenu est agité à 60°C pendant 70 minutes pour obtenir une solution de couleur orange / marron à une concentration en néodyme de 0,02 mol.$L^{-1}$.

Système catalytique P selon l'invention)

Une solution de 15,25 mL de pentylbenzène à 2,1 mol.$L^{-1}$ dans le méthylcyclohexane (32 mmol, 73 éq.) est additionnée sur 0,49 g de tri(di(2-éthylhexyl)phosphate) de néodyme (0,44 mmol, 1 éq.). Le mélange obtenu est agité à température ambiante pendant 30 minutes puis mis au repos pendant 12 h pour former une suspension violette translucide. A cette suspension sont ajoutés successivement 1,1 mL de butadiène (13 mmol, 30 éq.) et 2,6 mL d'hydrure de diisobutylaluminium (2,63 mmol, 6 éq.). Le mélange obtenu est agité à 30°C pendant 15 minutes. A la solution obtenue est ajoutée 2,4 mL de chlorure de diéthylaluminium (1,28 mmol, 2,9 éq.) et le mélange obtenu est agité à 60°C pendant 70 minutes pour obtenir une solution de couleur marron translucide à une concentration en néodyme de 0,02 mol.$L^{-1}$.

Système catalytique Q (selon l'invention)

Une solution de 15,25 mL de 1,4-diméthylbenzène (124 mmol, 282 éq.) est additionnée sur 0,49 g de tri(di(2-éthylhexyl)phosphate) de néodyme (0,44 mmol, 1 éq.). Le mélange obtenu est agité à température ambiante pendant 30 minutes puis mis au repos pendant 12 h pour former une suspension violet translucide. A cette suspension sont ajoutés successivement 1,1 mL de butadiène (13 mmol, 30 éq.) et 2,6 mL d'hydrure de diisobutylaluminium (2,63 mmol, 6 éq.). Le mélange obtenu est agité à 30°C pendant 15 minutes. A la solution obtenue est ajoutée 2,4 mL de chlorure de diéthylaluminium (1,28 mmol, 2,9 éq.) et le mélange obtenu est agité à 60°C pendant 70 minutes pour obtenir une solution de couleur marron translucide à une concentration en néodyme de 0,02 mol.$L^{-1}$.

Polymérisations

Les polymérisations se déroulent dans des bouteilles "Steinie" de 250 ml préalablement lavées et séchées, et équipées de capsules perforées et d'un septum en caoutchouc. Chaque réaction de polymérisation du butadiène est effectuée sous atmosphère inerte (azote).

Exemples A - Q

Une solution de 119 ml de méthylcyclohexane est introduite dans le réacteur à titre de solvant de polymérisation puis barbotée à l'azote pendant 10 minutes pour éliminer les impuretés. A cette solution sont ajoutés successivement 16 mL de butadiène fraîchement distillé (10,4 g), 0,8 mL d'une solution d'hydrure de diisobutylaluminium à 0,072 mol.L$^{-1}$ dans le méthylcyclohexane (580 μmol pour 100 g de butadiène), 1 mL du système catalytique A à O (200 μmol de Nd pour 100 g de butadiène). Le mélange réactionnel est ensuite chauffé à 90°C et agité pendant 5 min. La réaction est stoppée par addition de 1 mL de méthanol puis antioxydée par 0,2 pce d'antioxydant 6-PPD. Le polymère est obtenu par séchage sous vide, en présence d'un léger courant d'azote (pression réduite de 300 torr) à une température de 60°C pendant 24 h.

Exemple B1

Le protocole est identique à celui décrit ci-dessus sauf que le volume du système catalytique B est diminué de moitié (100 μmol de Nd pour 100 g de butadiène).

Effet du composé de formule (I) : toluène en fonction de la nature chimique des sels de néodyme, de leur forme, et de la composition de la formule catalytique

| | Nature des ligands portés par Nd | Forme du sel de Nd | Ratio agent alkylant / Nd | Ratio toluène / Nd | Conversion en % après 5 min |
|---|---|---|---|---|---|
| A | tri(di(2-éthylhexyl)-phosphate) | poudre | 6 | 0 | 60 |
| B | tri(di(2-éthylhexyl)-phosphate) | poudre | 6 | 326 | 89 |
| C | tri(di(2-éthylhexyl)-phosphate) | poudre | 3,5 | 0 | 81 |
| D | tri(di(2-éthylhexyl)-phosphate) | poudre | 3,5 | 342 | 96 |
| E | tri(di(2-éthylhexyl)-phosphate) | gel* | 6 | 0 | 60 |
| F | tri(di(2-éthylhexyl)-phosphate) | gel* | 6 | 266 | 80 |
| G | Tris(versatate) | Solution** | 12 | 0 | 51 |
| H | Tris(versatate) | Solution** | 12 | 258 | 76 |
| *Gel de tri[di(2-éthylhexyl)phosphate] de néodyme à 0,134 mol.L-1 dans le cyclohexane.<br>**Solution de tris(versatate) de néodyme à 0,506 mol.L-1 dans l'hexane | | | | | |

Ce tableau montre que les systèmes catalytiques selon l'invention, décrits dans les exemples B, D, F et H conduisent à une augmentation significative de l'activité catalytique comparativement aux essais témoins (exemples A, C, E et G respectivement) et donc de la performance en polymérisation.

Notamment, l'utilisation d'un additif selon l'invention est efficace quelle que soit la forme physique du sel de néodyme utilisé (exemples B, D et F (poudre, gel)), quelle que soit le rapport agent alkylant sur néodyme (exemples B et D) et quelle que soit la nature du sel de néodyme (tri(di(2-éthylhexyl)-phosphate) de néodyme ou tris(versatate) de néodyme).

Effet de la quantité du composé de formule (I) selon l'invention (toluène)

| Exemple | Ratio toluène / Nd | Conversion en % après 5 min |
|---|---|---|
| A | 0 | 60 |
| I | 13 | 69 |
| J | 67 | 75 |
| K | 134 | 87 |
| B | 326 | 89 |

Ce tableau montre que l'augmentation de l'activité catalytique peut être contrôlée et indexée sur la quantité de composé de formule (I) selon l'invention.

Effet de l'ordre d'addition entre le solvant aliphatique méthylcyclohexane et le composé toluène lors de la mise en contact de la solution hydrocarbonée avec le sel de néodyme

| Exemple | Addition en premier* | Addition en second* | Conversion en % après 5 min |
|---|---|---|---|
| L | Méthylcyclohexane | toluène | 82 |
| M | toluène | Méthylcyclohexane | 83 |
| *Cela correspond à la mise en contact du sel de néodyme avec le premier constituant de la solution hydrocarbonée.<br>**Cela correspond à la mise en contact du mélange issue de la mise en contact du sel de néodyme avec le premier constituant de la solution hydrocarbonée avec le deuxième constituant de la solution hydrocarbonée. | | | |

Ce tableau montre que le composé de formule (I) selon l'invention peut être ajouté avant ou après l'ajout du solvant hydrocarboné utilisé pour la solubilisation ou la dispersion du sel de néodyme lors de la préparation du système catalytique.

Effet induit selon la nature du composé de formule (I)

| Exemple | Additif | Ratio additif / Nd | Conversion en % après 5 min |
|---|---|---|---|
| A | - | 0 | 60 |
| P | Pentylbenzène | 73 | 70 |
| Q | 1,4-diméthyl benzène | 282 | 78 |

Ce tableau montre que plusieurs types d'additif selon l'invention peuvent être utilisés. La présence de ces additifs au sein du système catalytique conduit à une amélioration de la performance des systèmes catalytiques à base de sel de néodyme.

Effet de la concentration de néodyme dans le milieu de polymérisation

| Exemple | Conc. Nd (μmol pour 100 g de butadiène) | Ratio toluène / Nd | Conversion en % après 5 min |
|---|---|---|---|
| A | 200 | 0 | 60 |
| B1 | 100 | 326 | 75 |
| B | 200 | 326 | 90 |

Ce tableau montre que l'amélioration de l'activité catalytique par l'utilisation d'un composé de formule (I) selon l'invention est possible quelle que soit la concentration en néodyme des systèmes catalytiques.

Tableau récapitulatif des macro- et microstructures

| Exemple | Macrostructure | | | Microstructure (%) | | |
|---|---|---|---|---|---|---|
| | Mn (g/mol) | Ip | Viscosité | 1,2 | Trans - 1,4 | Cis -1,4 |
| A (comp) | 105727 | 1,97 | 2,12 | 0,6 | 1,5 | 97,9 |
| B (inv) | 90712 | 2,17 | 2,06 | 0,5 | 2,6 | 96,9 |
| E(comp) | 97478 | 2,00 | 1,96 | 0,6 | 2,0 | 97,4 |
| F(inv) | 99100 | 2,14 | 2,10 | 0,5 | 2,8 | 96,7 |
| G(comp) | 83347 | 2.23 | 1,85 | 0,7 | 1,7 | 97,6 |
| H(inv) | 87927 | 3.33 | 2,57 | 0,7 | 1,7 | 97,6 |
| I(inv) | 106627 | 1,94 | nc | 0,6 | 1,6 | 97,8 |
| J(inv) | 112822 | 1,93 | nc | 0,5 | 1,6 | 97,9 |
| K(inv) | 110783 | 1,94 | nc | 0,6 | 1,7 | 97,7 |
| P(inv) | 105013 | 2.45 | 2.24 | 0,6 | 0,9 | 98,5 |
| Q(inv) | 97788 | 1.97 | 2.18 | 0,6 | 1,4 | 98,0 |
| C(comp) | 133906 | 2 | nc | 0,5 | <0,8 | 99,5 |
| D(inv) | 153856 | 2,36 | nc | 0,5 | <0,8 | 99,5 |

L'ajout d'un composé de formule (I) selon l'invention au sein du système catalytique permet d'accroître l'activité catalytique du dit système. La stéréospécificité du catalyseur n'est pas pénalisée puisque les taux de 1,4-cis restent élevés. La macrostructure reste également similaire avec éventuellement une légère hausse de l'indice de polydispersité de l'ordre de 0,1 à 0,2 points dans le cas du tri(di(2-éthylhexyl)-phosphate) de néodyme.

Méthodes de mesure utilisées

1. Mesure de la viscosité inhérente

La viscosité inhérente $\eta$ inh est mesurée à 25°C à 0,1 g/dL dans le toluène et caractérise la macrostructure de l'élastomère.

La viscosité est calculée par la formule

$$\eta = \frac{1}{C} \times \ln\left(\frac{T_1}{T_2}\right)$$

avec $\eta$ la viscosité inhérente (dL/g), C la concentration en polymère dans le toluène (g/dL), $T_1$ le temps d'écoulement de la solution de polymère (s) et $T_2$ le temps d'écoulement du toluène (s))

2. Caractérisation de la macrostructure par SEC

a) Principe de la mesure:

La chromatographie d'exclusion par la taille ou SEC (size exclusion chromatography) permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier.

Sans être une méthode absolue, la SEC permet d'appréhender la distribution des masses moléculaires d'un polymère. A partir de produits étalons commerciaux, les différentes masses moyennes en nombre (Mn) et en poids (Mw) peuvent être déterminées et l'indice de polydispersité calculé (Ip = Mw/Mn).

b) Préparation du polymère:

Il n'y a pas de traitement particulier de l'échantillon de polymère avant analyse. Celui-ci est simplement solubilisé dans du tétrahydrofuranne à une concentration d'environ 1 g/l.

c) Analyse SEC:

Cas c1) : L'appareillage utilisé est un chromatographe « WATERS alliance ». Le solvant d'élution est le tétrahydrofuranne, le débit de 1 ml/min., la température du système de 35° C et la durée d'analyse de 90 min. On utilise un jeu de deux colonnes de dénomination commerciale « STYRAGEL HT6E ».
Le volume injecté de la solution de l'échantillon de polymère est 100 μl. Le détecteur est un réfractomètre différentiel « WATERS 2140 » et le logiciel d'exploitation des données chromatographiques est le système « WATERS MILLENIUM ».
Cas c2) : L'appareillage utilisé est un chromatographe « WATERS, modèle 150C ». Le solvant d'élution est le tétrahydrofuranne, le débit de 0,7 ml/min la température du système de 35°C et la durée d'analyse de 90 min. On utilise un jeu de quatre colonnes en série, de dénominations commerciales « SHODEX KS807 », « WATERS type STYRAGEL HMW7 » et deux « WATERS STYRAGEL HMW6E ».
Le volume injecté de la solution de l'échantillon de polymère est 100 μl. Le détecteur est un réfractomètre différentiel « WATERS modèle RI32X » et le logiciel d'exploitation des données chromatographiques est le système « WATERS MILLENIUM » (version 3.00).

3. Caractérisation de la microstructure (taux de 1.4-cis) par proche infrarouge (NIR)

La technique de dosage appelée « proche infrarouge » (NIR) a été utilisée. Il s'agit d'une méthode indirecte faisant appel à des élastomères « témoin », dont la microstructure a été mesurée par la technique de RMN$^{13}$C. On utilise la relation quantitative (loi de Beer-Lambert) existant entre la répartition des monomères dans un élastomère et la forme du spectre NIR de celui-ci. Cette technique est mise en oeuvre en deux étapes:

1) Etalonnage :

On procède à l'acquisition des spectres respectifs des élastomères « témoin ». On établit un modèle mathématique associant une microstructure à un spectre donné, ceci à l'aide de la méthode de régression PLS (Partial Least Squares) reposant sur une analyse factorielle des données spectrales. Les deux documents suivants traitent d'une manière approfondie de la théorie et de la mise en oeuvre de cette méthode d'analyse de données « multi-variées » :

(1) P. GELADI et B. R. KOWALSKI, "Partial Least Squares régression : a tutorial", Analytica Chimica Acta, vol. 185, 1-17 (1986).
(2) M. TENENHAUS, "La régression PLS - Théorie et pratique", Paris, Editions Technip (1998).

2) Mesure :

On procède à un enregistrement du spectre de l'échantillon. Puis on réalise le calcul de la microstructure.

## Revendications

1. Système catalytique activé de type « préformé » pour la polymérisation stéréospécifique 1,4-cis des diènes conjugués à base d'au moins:

- un ou plusieurs monomères diènes conjugués de préformation,
- un ou plusieurs sels d'un ou de plusieurs métaux de terre rare d'un ou plusieurs acides choisis parmi un acide phosphorique organique, un acide carboxylique organique et leur mélange, le rapport molaire du monomère diène conjugué sur le sel de terre rare étant au moins de 10 et inférieur à 100,
- un ou plusieurs agents d'alkylation constitué d'un ou plusieurs alkylaluminiums de formule $AlR_3$ ou $HAlR_2$, dans laquelle R représente un radical alkyle et H représente un atome d'hydrogène,
- un ou plusieurs donneurs d'halogène constitué d'un halogénure d'alkylaluminium et
- un ou plusieurs composés répondant à la formule (I) suivante :

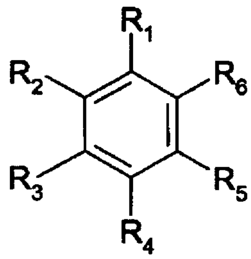

dans laquelle les groupes $R_1$ à $R_6$, identiques ou différents, sont choisis parmi un atome d'hydrogène, un radical alkyle aliphatique, linéaire ou ramifié, saturé ou insaturé, cycloaliphatique ou aromatique, à la condition que l'un au moins des groupes $R_1$ à $R_6$ ne désigne pas un atome d'hydrogène.

**2.** Système catalytique selon la revendication 1, **caractérisé en ce que** le monomère diène conjugué de préformation est choisi parmi le butadiène, l'isoprène et leur mélange.

**3.** Système catalytique selon la revendication 1 ou 2, **caractérisé en ce que** le rapport molaire du monomère diène conjugué de préformation sur le sel de terre rare a une valeur allant de 10 à 80, et plus préférentiellement de 15 à 70.

**4.** Système catalytique selon l'une quelconque des revendications 1 à 3, **caractérisé en ce que** le sel d'un ou de plusieurs métaux de terre rare est sous forme d'une solution dans un solvant hydrocarboné inerte, d'une suspension dans un solvant hydrocarboné inerte ou alors d'un gel dans un solvant hydrocarboné inerte, ledit solvant répondant à la formule (I) définie dans la revendication 1.

**5.** Système catalytique selon l'une quelconque des revendications 1 à 4, **caractérisé en ce que** le sel d'un ou de plusieurs métaux de terre rare est choisi parmi le tris[di(2-éthylhexyl)phosphate], le tris(versatate) et leur mélange dudit ou desdits métaux de terre rare.

**6.** Système catalytique selon la revendication 5, **caractérisé en ce que** ledit sel de terre rare est choisi parmi le tris[di(2-éthylhexyl)phosphate] de néodyme, le tris(versatate) de néodyme et leur mélange.

**7.** Système catalytique selon l'une quelconque des revendications 1 à 6, **caractérisé en ce que** la concentration molaire en sel de métal de terre rare dans le système catalytique est comprise entre 0,005 mol/L et 0,100 mol/L, de préférence allant de 0,010 à 0,080 mol/L, et encore plus préférentiellement allant de 0,020 à 0,060 mol/L.

**8.** Système catalytique selon l'une quelconque des revendications 1 à 7, **caractérisé en ce que** l'agent d'alkylation est de l'hydrure de diisobutylaluminium.

**9.** Système catalytique selon l'une quelconque des revendications 1 à 8, **caractérisé en ce que** le rapport molaire de l'agent d'alkylation sur le sel de terre rare est compris entre 3 et 20, et encore plus préférentiellement allant de 4 à 10.

**10.** Système catalytique selon l'une quelconque des revendications 1 à 9, **caractérisé en ce que** le donneur d'halogène est du chlorure de diéthylaluminium.

**11.** Système catalytique selon l'une quelconque des revendications 1 à 10, **caractérisé en ce que** le rapport molaire du donneur d'halogène sur le sel de terre rare est compris entre 0,5 et 10 et, de préférence, allant de 2 à 3,6 et encore plus préférentiellement allant de 2,5 à 3,2.

**12.** Système catalytique selon l'une quelconque des revendications 1 à 11, **caractérisé en ce que** le composé de formule (I) est choisi parmi le toluène, le pentylbenzène, le 1,4-diméthylbenzène et leur mélange.

**13.** Système catalytique selon l'une quelconque des revendications 1 à 12, **caractérisé en ce que** le rapport molaire du composé de formule (I) sur le sel de terre rare est compris entre 5 et 1000 et, de préférence, allant de 50 à 500, et encore plus préférentiellement de 100 à 400.

**14.** Système catalytique selon l'une quelconque des revendications 1 à 12, **caractérisé en ce qu'**il comprend un solvant choisi parmi le cyclohexane, le méthylcyclohexane, le n-heptane, le toluène, le pentylbenzène, le 1,4-diméthylbenzène et leur mélange.

**15.** Procédé de préparation d'un système catalytique tel que défini à l'une quelconque des revendications précédentes, **caractérisé en ce qu'**il comprend les étapes successives suivantes :

- dans une première étape, réaliser une suspension ou solution ou gel dudit sel de métal terre rare tel que défini aux revendications 1 et 4 à 7 dans un solvant, comportant éventuellement ledit composé de formule (I), si le solvant ne comporte pas le composé de formule (I), ajouter ledit composé répondant à la formule (I) tel que défini aux revendications 1, 12 et 13, puis
- dans une seconde étape, ajouter au mélange obtenu à l'étape précédente un ou plusieurs monomères diènes conjugués de préformation tels que définis aux revendications 1, 2 et 3, puis
- dans une troisième étape, ajouter un ou plusieurs agents d'alkylation tels que définis aux revendications 1, 8 et 9 au mélange obtenu à l'étape précédente pour l'obtention d'un sel alkylé, et
- dans une quatrième étape, ajouter un ou plusieurs donneurs d'halogène tels que définis aux revendications 1, 10 et 11 au sel alkylé obtenu à l'étape précédente.

**16.** Procédé de synthèse d'élastomères diéniques consistant à polymériser, dans un solvant hydrocarboné inerte, le ou les monomère(s) diène(s) en présence d'un système catalytique tel que décrit à l'une quelconque des revendications 1 à 14.

**17.** Procédé d'activation d'un système catalytique de type « préformé » pour la polymérisation stéréospécifique 1,4-cis des diènes conjugués à base de :

- un ou plusieurs monomères diènes conjugués de préformation tels que définis aux revendications 1, 2 et 3,
- un ou plusieurs sels d'un ou de plusieurs métaux de terre rare d'un ou plusieurs acides choisis parmi un acide phosphorique organique, un acide carboxylique organique et leur mélange, tels que définis aux revendications 1 et 4 à 7,
- un ou plusieurs agents d'alkylation constitué d'un ou plusieurs alkylaluminiums de formule $AlR_3$ ou $HAlR_2$, dans laquelle R représente un radical alkyle et H représente un atome d'hydrogène, tels que définis aux revendications 1, 8 et 9,
- un ou plusieurs donneurs d'halogène constitué d'un halogénure d'alkylaluminium, tels que définis aux revendications 1, 10 et 11,

comprenant une étape d'ajout d'un composé de formule (I) tel que défini aux revendications 1, 12 et 13 aux sels d'un ou de plusieurs métaux de terre rare.

## Patentansprüche

**1.** Aktiviertes katalytisches System vom "vorgebildeten" Typ zur 1,4-cis-stereospezifischen Polymerisation von konjugierten Dienen auf Basis von mindestens:

- einem oder mehreren konjugierten Dienmonomeren für die Vorbildung,
- einem oder mehreren Salzen eines oder mehrerer Seltenerdmetalle einer oder mehrerer Säuren, die aus einer organischen Phosphorsäure, einer organischen Carbonsäure und einer Mischung davon ausgewählt sind, wobei das Molverhältnis von konjugiertem Dienmonomer zu Seltenerdmetallsalz mindestens 10 und weniger als 100 beträgt,
- einem oder mehreren Alkylierungsmitteln, bestehend aus einer oder mehreren Alkylaluminiumverbindungen der Formel $AlR_3$ oder $HAlR_2$, wobei R für einen Alkylrest steht und H für ein Wasserstoffatom steht,
- einem oder mehreren Halogendonoren, bestehend aus einem Alkylaluminiumhalogenid, und
- einer oder mehreren Verbindungen der folgenden Formel (I):

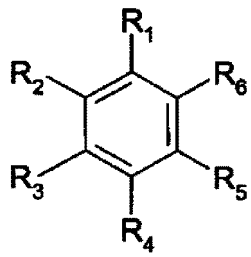

wobei die Gruppen $R_1$ bis $R_6$ gleich oder verschieden sind und aus einem Wasserstoffatom und einem linearen oder verzweigten, gesättigten oder ungesättigten, aliphatischen Alkylrest, cycloaliphatischen Rest oder aromatischen Rest ausgewählt sind, mit der Maßgabe, dass mindestens eine der Gruppen $R_1$ bis $R_6$ nicht für ein Wasserstoffatom steht.

2. Katalytisches System nach Anspruch 1, **dadurch gekennzeichnet, dass** das konjugierte Dienmonomer für die Vorbildung aus Butadien, Isopren und einer Mischung davon ausgewählt ist.

3. Katalytisches System nach Anspruch 1 oder 2, **dadurch gekennzeichnet, dass** das Molverhältnis von konjugiertem Dienmonomer für die Vorbildung zu Seltenerdmetallsalz im Bereich von 10 bis 80 und weiter bevorzugt 15 bis 70 liegt.

4. Katalytisches System nach einem der Ansprüche 1 bis 3, **dadurch gekennzeichnet, dass** das Salz eines oder mehrerer Seltenerdmetalle in Form einer Lösung in einem inerten Kohlenwasserstofflösungsmittel, einer Suspension in einem inerten Kohlenwasserstofflösungsmittel oder auch eines Gels in einem inerten Kohlenwasserstofflösungsmittel vorliegt, wobei das Lösungsmittel der in Anspruch 1 definierten Formel (I) entspricht.

5. Katalytisches System nach einem der Ansprüche 1 bis 4, **dadurch gekennzeichnet, dass** das Salz eines oder mehrerer Seltenerdmetalle aus Tris[bis(2-ethylhexyl)phosphat] und Tris(versatat) des bzw. der Seltenerdmetalle und einer Mischung davon ausgewählt ist.

6. Katalytisches System nach Anspruch 5, **dadurch gekennzeichnet, dass** das Seltenerdmetallsalz aus Neodymtris[bis(2-ethylhexyl)phosphat], Neodymtris-(versatat) und einer Mischung davon ausgewählt ist.

7. Katalytisches System nach einem der Ansprüche 1 bis 6, **dadurch gekennzeichnet, dass** die molare Konzentration an Seltenerdmetallsalz in dem katalytischen System zwischen 0,005 mol/L und 0,100 mol/L, vorzugsweise im Bereich von 0,010 bis 0,080 mol/L und noch weiter bevorzugt im Bereich von 0,020 bis 0,060 mol/L liegt.

8. Katalytisches System nach einem der Ansprüche 1 bis 7, **dadurch gekennzeichnet, dass** es sich bei dem Alkylierungsmittel um Diisobutylaluminiumhydrid handelt.

9. Katalytisches System nach einem der Ansprüche 1 bis 8, **dadurch gekennzeichnet, dass** das Molverhältnis von Alkylierungsmittel zu Seltenerdmetallsalz zwischen 3 und 20 und noch weiter bevorzugt im Bereich von 4 bis 10 liegt.

10. Katalytisches System nach einem der Ansprüche 1 bis 9, **dadurch gekennzeichnet, dass** es sich bei dem Halogendonor um Diethylaluminiumchlorid handelt.

11. Katalytisches System nach einem der Ansprüche 1 bis 10, **dadurch gekennzeichnet, dass** das Molverhältnis von Halogendonor zu Seltenerdmetallsalz zwischen 0,5 und 10 und vorzugsweise im Bereich von 2 bis 3,6 und noch weiter bevorzugt im Bereich von 2,5 bis 3,2 liegt.

12. Katalytisches System nach einem der Ansprüche 1 bis 11, **dadurch gekennzeichnet, dass** die Verbindung der Formel (I) aus Toluol, Pentylbenzol, 1,4-Dimethylbenzol und einer Mischung davon ausgewählt ist.

13. Katalytisches System nach einem der Ansprüche 1 bis 12, **dadurch gekennzeichnet, dass** das Molverhältnis von Verbindung der Formel (I) zu Seltenerdmetallsalz zwischen 5 und 1000 und vorzugsweise im Bereich von 50 bis 500 und noch weiter bevorzugt von 100 bis 400 liegt.

14. Katalytisches System nach einem der Ansprüche 1 bis 12, **dadurch gekennzeichnet, dass** es ein Lösungsmittel,

das aus Cyclohexan Methylcyclohexan, n-Heptan, Toluol, Pentylbenzol, 1,4-Dimethylbenzol und einer Mischung davon ausgewählt ist, umfasst.

**15.** Verfahren zur Herstellung eines katalytischen Systems gemäß einem der vorhergehenden Ansprüche, **dadurch gekennzeichnet, dass** es die folgenden aufeinanderfolgenden Schritte umfasst:

- in einem ersten Schritt Herstellen einer Suspension oder einer Lösung oder eines Gels des Seltenerdmetallsalzes gemäß den Ansprüchen 1 und 4 bis 7 in einem Lösungsmittel, das gegebenenfalls die Verbindung der Formel (I) umfasst,
wenn das Lösungsmittel die Verbindung der Formel (I) nicht umfasst, Zugeben der Verbindung der Formel (I) gemäß den Ansprüchen 1, 12 und 13, dann
- in einem zweiten Schritt Zugeben eines oder mehrerer konjugierter Dienmonomere für die Vorbildung gemäß den Ansprüchen 1, 2 und 3 zu der im vorhergehenden Schritt erhaltenen Mischung, dann
- in einem dritten Schritt Zugeben eines oder mehrerer Alkylierungsmittel gemäß den Ansprüchen 1, 8 und 9 zu der im vorhergehenden Schritt erhaltenen Mischung zum Erhalt eines alkylierten Salzes und
- in einem vierten Schritt Zugeben eines oder mehrerer Halogendonoren gemäß den Ansprüchen 1, 10 und 11 zu dem im vorhergehenden Schritt erhaltenen alkylierten Salz.

**16.** Verfahren zur Synthese von Dienelastomeren, das darin besteht, dass man in einem inerten Kohlenwasserstofflösungsmittel das Dienmonomer bzw. die Dienmonomere in Gegenwart eines katalytischen Systems gemäß einem der Ansprüche 1 bis 14 polymerisiert.

**17.** Verfahren zur Aktivierung eines katalytischen Systems vom "vorgebildeten" Typ zur 1,4-cisstereospezifischen Polymerisation von konjugierten Dienen auf Basis von:

- einem oder mehreren konjugierten Dienmonomeren für die Vorbildung gemäß den Ansprüchen 1, 2 und 3,
- einem oder mehreren Salzen eines oder mehrerer Seltenerdmetalle einer oder mehrerer Säuren, die aus einer organischen Phosphorsäure, einer organischen Carbonsäure und einer Mischung davon ausgewählt sind, gemäß den Ansprüchen 1 und 4 bis 7,
- einem oder mehreren Alkylierungsmitteln, bestehend aus einer oder mehreren Alkylaluminiumverbindungen der Formel $AlR_3$ oder $HAlR_2$, wobei R für einen Alkylrest steht und H für ein Wasserstoffatom steht, gemäß den Ansprüchen 1, 8 und 9,
- einem oder mehreren Halogendonoren, bestehend aus einem Alkylaluminiumhalogenid, gemäß den Ansprüchen 1, 10 und 11,
umfassend einen Schritt des Zugebens einer Verbindung der Formel (I) gemäß den Ansprüchen 1, 12 und 13 zu den Salzen eines oder mehrerer Seltenerdmetalle.

## Claims

**1.** Activated catalytic system of "preformed" type for the 1,4-cis stereospecific polymerization of conjugated dienes based on at least:

- one or more preformation conjugated diene monomers,
- one or more salts of one or more rare-earth metals of one or more acids chosen from an organic phosphoric acid, an organic carboxylic acid and a mixture thereof, the mole ratio of the conjugated diene monomer to the rare-earth metal salt being at least 10
- one or more alkylating agents consisting of one or more alkylaluminiums of formula $AlR_3$ or $HAlR_2$, in which R represents an alkyl radical and H represents a hydrogen atom,
- one or more halogen donors consisting of an alkylaluminium halide, and
- one or more compounds corresponding to formula (I) below:

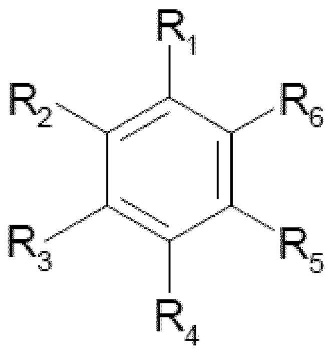

in which the groups $R_1$ to $R_6$, which may be identical or different, are chosen from a hydrogen atom, a linear or branched, saturated or unsaturated aliphatic alkyl, cycloaliphatic or aromatic radical, on condition that at least one of the groups $R_1$ to $R_6$ does not denote a hydrogen atom.

2. Catalytic system according to Claim 1, **characterized in that** the preformation conjugated diene monomer is chosen from butadiene and isoprene, and a mixture thereof.

3. Catalytic system according to Claim 1 or 2, **characterized in that** the mole ratio of the preformation conjugated diene monomer to the rare-earth metal salt has a value ranging from 10 to 80 and more preferentially from 15 to 70.

4. Catalytic system according to any one of Claims 1 to 3, **characterized in that** the salt of one or more rare-earth metals is in the form of a solution in an inert hydrocarbon-based solvent, a suspension in an inert hydrocarbon-based solvent or even a gel in an inert hydrocarbon-based solvent, the said solvent corresponding to formula (I) defined in Claim 1.

5. Catalytic system according to any one of Claims 1 to 4, **characterized in that** the salt of one or more rare-earth metals is chosen from tris[bis(2-ethylhexyl)phosphate], tris(versatate), and a mixture thereof of the said rare-earth metal(s).

6. Catalytic system according to Claim 5, **characterized in that** the said rare-earth metal salt is chosen from neodymium tris[bis(2-ethylhexyl)phosphate] and neodymium tris(versatate), and a mixture thereof.

7. Catalytic system according to any one of Claims 1 to 6, **characterized in that** the mole concentration of rare-earth metal salt in the catalytic system is between 0.005 mol/L and 0.100 mol/L, preferably ranging from 0.010 to 0.080 mol/L and even more preferentially ranging from 0.020 to 0.060 mol/L.

8. Catalytic system according to any one of Claims 1 to 7, **characterized in that** the alkylating agent is diisobutylaluminium hydride.

9. Catalytic system according to any one of Claims 1 to 8, **characterized in that** the mole ratio of the alkylating agent to the rare-earth metal salt is between 3 and 20 and even more preferentially ranging from 4 to 10.

10. Catalytic system according to any one of Claims 1 to 9, **characterized in that** the halogen donor is diethylaluminium chloride.

11. Catalytic system according to any one of Claims 1 to 10, **characterized in that** the mole ratio of the halogen donor to the rare-earth metal salt is between 0.5 and 10, preferably ranging from 2 to 3.6 and even more preferentially ranging from 2.5 to 3.2.

12. Catalytic system according to any one of Claims 1 to 11, **characterized in that** the compound of formula (I) is chosen from toluene, pentylbenzene and 1,4-dimethylbenzene, and a mixture thereof.

13. Catalytic system according to any one of Claims 1 to 12, **characterized in that** the mole ratio of the compound of formula (I) to the rare-earth metal salt is between 5 and 1000, preferably ranging from 50 to 500 and even more preferentially from 100 to 400.

**14.** Catalytic system according to any one of Claims 1 to 12, **characterized in that** it comprises a solvent chosen from cyclohexane, methylcyclohexane, n-heptane, toluene, pentylbenzene and 1,4-dimethylbenzene, and a mixture thereof.

**15.** Process for preparing a catalytic system as defined in any one of the preceding claims, **characterized in that** it comprises the following successive steps:

- in a first step, preparing a suspension or solution or gel of the said rare-earth metal salt as defined in Claims 1 and 4 to 7 in a solvent, optionally comprising the said compound of formula (I),
- if the solvent does not comprise the compound of formula (I), adding the said compound corresponding to formula (I) as defined in Claims 1, 12 and 13, and then
- in a second step, adding to the mixture obtained in the preceding step one or more preformation conjugated diene monomers as defined in Claims 1, 2 and 3, and then
- in a third step, adding one or more alkylating agents as defined in Claims 1, 8 and 9 to the mixture obtained in the preceding step to obtain an alkylated salt, and
- in a fourth step, adding one or more halogen donors as defined in Claims 1, 10 and 11 to the alkylated salt obtained in the preceding step.

**16.** Process for synthesizing diene elastomers, which consists in polymerizing, in an inert hydrocarbon-based solvent, the diene monomer(s) in the presence of a catalytic system as described in any one of Claims 1 to 14.

**17.** Process for activating a catalytic system of "preformed" type for the 1,4-cis stereospecific polymerization of conjugated dienes based on:

- one or more preformation conjugated diene monomers as defined in Claims 1, 2 and 3,
- one or more salts of one or more rare-earth metals of one or more acids chosen from an organic phosphoric acid and an organic carboxylic acid, and a mixture thereof, as defined in Claims 1 and 4 to 7,
- one or more alkylating agents consisting of one or more alkylaluminiums of formula $AlR_3$ or $HAlR_3$, in which R represents an alkyl radical and H represents a hydrogen atom, as defined in Claims 1, 8 and 9,
- one or more halogen donors consisting of an alkylaluminium halide, as defined in Claims 1, 10 and 11,

comprising a step of adding a compound of formula (I) as defined in Claims 1, 12 and 13 to the salts of one or more rare-earth metals.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 3794604 A
- JP 60023406 A
- EP 1099711 A
- WO 2006133757 A
- EP 1845118 A
- WO 10069511 A
- WO 10069805 A


### Littérature non-brevet citée dans la description


- **Y. B. MONAKOV ; Y. R. BIESHEV ; A. A. BERG ; S. R. RAFIKOV.** *Compte-rendu de l'Académie des Sciences d'U.RS.S.,* 1977, vol. 234 (5
- Proceedings of China - U. S. Bilatéral Symposium on Polymer Chemistry and Physics. Science Press, 1981, 382-398
- Comparison of the solvents n-hexane, tert-butyl benzene and toluene in the polymerization of 1,3-butadiene with the Ziegler catalyst system neodymium versatate/diisobutylaluminum hybride/ethylaluminum sesquichloride. *Journal of Maeromolecular Science, Part A: Pure and Applied Chemistry,* 2006, vol. 43, 841-854
- **P. GELADI ; B. R. KOWALSKI.** Partial Least Squares régression : a tutorial. *Analytica Chimica Acta,* 1986, vol. 185, 1-17
- **M. TENENHAUS.** *La régression PLS - Théorie et pratique,* 1998